# EUROPÄISCHE PATENTSCHRIFT

(11) **EP 3 220 030 B1**
(45) Veröffentlichungstag und Bekanntmachung des Hinweises auf die Patenterteilung: **12.08.2020**
(21) Anmeldenummer: 17158445.1
(22) Anmeldetag: 28.02.2017
(51) Int. Cl.: F16L 5/02, F16L 5/08, H02G 3/22

(54) **DICHTUNGSEINSATZ ZUM ABDICHTEN EINER LEITUNG GEGENÜBER EINER AUSNEHMUNG**
SEAL INSERT FOR SEALING A CONDUIT RELATIVE TO AN OPENING
ÉLÉMENT D'ÉTANCHÉITÉ D'UNE CONDUITE PAR RAPPORT À UNE OUVERTURE

(30) Priorität: 15.03.2016 DE 202016101429 U
(43) Veröffentlichungstag der Anmeldung: 20.09.2017
(73) Patentinhaber: DOYMA GmbH & Co, 28876 Oyten (DE)
(72) Erfinder: Chikatimalla, Rajesh, Hyderabad 500004 (IN)
(74) Vertreter: Eisenführ Speiser

(56) Entgegenhaltungen:
- EP-A1- 2 385 286
- EP-A1- 2 447 583
- EP-A1- 2 589 845
- DE-U1- 29 517 409
- US-A- 5 988 698

## Beschreibung

Die Erfindung betrifft einen Dichtungseinsatz zum Abdichten einer Leitung gegenüber einer Ausnehmung in einem Wandabschnitt einer Gebäudewandung, gemäß Anspruch 1.

Die Versorgung eines Gebäudes mit Medien wird regelmäßig durch erdverlegte Leitungen realisiert. Um diese Leitungen in das Gebäude einzuführen, muss die Gebäudebewandung durchdrungen werden. Zur Durchdringung der Gebäudebewandung weisen üblicherweise mehrere Wandabschnitte eine Ausnehmung auf, durch welche sich eine oder mehrere Leitungen erstrecken.

Die Gebäudebewandung ist mit einer Abdichtung versehen, um die sich in dem Gebäude befindlichen Personen, Sachgegenstände und Gebäudeeinrichtungen vor äußeren Einflüssen, insbesondere eindringendem Wasser und Feuchtigkeit zu schützen. Die Ausnehmungen in den Wandabschnitten der Gebäudebewandung unterbrechen somit die Gebäudeabdichtung.

Um einen gas- und wasserdichten Übergang von der Gebäudeabdichtung zur Leitung herzustellen, werden gattungsgemäße Dichtungseinsätze verwendet. Durch den Einsatz solcher Dichtungseinsätze wird die Gebäudeabdichtung wiederhergestellt.

Gattungsgemäße Dichtungseinsätze weisen einen äußeren und einen inneren Dichtabschnitt auf. Der äußere Dichtabschnitt dient zum Abdichten gegen die Ausnehmung, wobei der innere Dichtabschnitt zum Abdichten gegen die Leitung dient.

Es hat sich gezeigt, dass der Anpressdruck des äußeren Dichtabschnitts und des inneren Dichtabschnitts in einem vorgegebenen Bereich liegen muss, damit eine widerstandsfähige und dauerhafte Abdichtung gewährleistet werden kann.

Bekannte Dichtungseinsätze weisen Spanneinrichtungen auf, welche gleichzeitig sowohl den äußeren Dichtabschnitt mit der Ausnehmung als auch den inneren Dichtabschnitt mit der Leitung verspannen. Die Verspannung des äußeren Dichtabschnitts und die Verspannung des inneren Dichtabschnitts sind somit voneinander abhängig. Aufgrund dieser Abhängigkeit sind die Einsatzmöglichkeiten entsprechender Dichtungseinsätze beschränkt, sodass zur Verspannung verschiedener Leitungstypen oftmals unterschiedliche Dichtungseinsätze eingesetzt werden müssen, um eine Verspannung in dem gewünschten Wertebereich zu erzeugen.

Zum Auflösen dieser Abhängigkeit ist man dazu übergegangen, die Verspannung des äußeren Dichtabschnitts von der Verspannung des inneren Dichtabschnitts zu entkoppeln, sodass eine Beeinflussung des inneren Dichtabschnitts durch die für den äußeren Dichtabschnitt eingesetzte Spanneinrichtung vermieden wird.

Aus US 5 988 698 A ist zum Beispiel ein flexibles Durchgangs-Anschlussstück zum Abdichten einer Leitung gegenüber einer Behälterwandung bekannt. Das Anschlussstück umfasst einen ringförmigen Dichtflansch, der außen um die Ausnehmung gegen die Behälterwandung verspannt wird. Der Dichtflansch ist über einen Rückbiegeabschnitt mit mehreren hülsenartigen Abschnitten verbunden, die jeweils über Schlauchklemmen mit der Außenseite einer durch einen Abschnitt hindurchgeschobenen Leitung verspannt werden.

Um Dichtungseinsätze zum Abdichten gegen Leitungen unterschiedlichen Durchmessers verwenden zu können, weisen bekannte Dichtungseinsätze mehrere innere Dichtabschnitte unterschiedlichen Durchmessers auf. Somit kann je nach Bedarf der geeignete Dichtungsabschnitt zum Abdichten gegen eine Leitung eines bestimmten Durchmessers verwendet werden.

EP 2 447 583 A1 betrifft eine Dichtvorrichtung zum Hindurchführen einer Leitung durch einen Bewandungsabschnitt. Die Dichtvorrichtung umfasst einen Dichtkörper, der in eine Öffnung des Bewandungsabschnittes eingesetzt und mittels eines Klemmkörpers verformt wird. Der Dichtkörper umfasst mehrere ineinander steckbare Dichtkonen, mit jeweils einem konischen Abschnitt zum Abdichten von Leitungen mit unterschiedlichen Durchmessern. In einer alternativen Ausführungsform ist ein zweiter Dichtkonus in einem Sollbruch-Abschnitt mittels einer Sollbruchstelle mit einem ersten Dichtkonus verbunden. Ein dritter Dichtkonus ist in einem Sollbruch-Abschnitt mit dem zweiten Dichtkonus verbunden.

Dichtungseinsätze, welche sowohl eine Entkopplung des äußeren Dichtabschnitts von dem inneren Dichtabschnitt als auch mehrere innere Dichtabschnitte unterschiedlichen Durchmessers aufweisen, sind jedoch nicht in der Lage axiale oder radiale Bewegungen der Leitung aufzunehmen, gegen welche der Dichtungseinsatz abdichtet. In der Praxis kommt es jedoch auch nach der Installation eines Dichtungseinsatzes zu Leitungsbewegungen, welche von dem verwendeten Dichtungseinsatz aufgenommen werden müssen, ohne dass die Dichtwirkung beeinträchtigt wird.

DE 295 17 409 U1 zeigt eine Kabelführung mit Schutzrohr, welche eine Dichtungseinrichtung mit einem dem Schutzrohr zugeordneten Gummielement umfasst. Für eine Abdichtung des Schutzrohres gegen die durch das Schutzrohr geführte Leitung wird ein Schrumpfschlauch verwendet, der durch Wärmeeinwirkung sich an die Außenseite der durch das Schutzrohr geführten Leitung und an die Außenseite des Schutzrohres abdichtend anlegt.

Die Aufgabe der vorliegenden Erfindung ist es folglich einen Dichtungseinsatz bereitzustellen, welcher gegenüber den bekannten Dichtungseinsätzen verbessert ist. Insbesondere ist es eine Aufgabe der vorliegenden Erfindung einen Dichtungseinsatz bereitzustellen, welcher zum Abdichten gegen Leitungen unterschiedlichen Durchmessers verwendet werden kann, eine Entkopplung des äußeren Dichtabschnitts und der inneren Dichtabschnitte aufweist und gleichzeitig axiale oder radiale Leitungsbewegungen aufnehmen kann.

Die Aufgabe wird durch einen Dichtungseinsatz nach Anspruch 1 gelöst. Zumindest ein Spannkörper der ersten Spanneinrichtung weist eine Stützfläche auf, welche den Dichtkörper in radialer Richtung nach innen abstützt, wodurch eine Ausdehnung des Dichtkörpers in radialer Richtung nach innen verhindert oder erheblich reduziert wird, sodass aus der gesamten oder zumindest aus einem Großteil der zum Verspannen des äußeren Dichtabschnitts aufgebrachten Verspannkraft eine radiale Ausdehnung des Dichtkörpers nach außen bewirkt ist, und wobei benachbarte innere Dichtabschnitte mittels Stegabschnitte verbunden sind. Dadurch, dass der Kompensatorabschnitt flexibel und längenveränderlich ist, können Relativbewegungen der abgedichteten Leitung gegenüber der Ausnehmung aufgenommen, d. h. kompensiert werden, ohne dass die Dichtwirkung des Dichtungseinsatzes beeinträchtigt wird. Vorzugsweise ermöglicht der Kompensatorabschnitt eine Relativbewegung zwischen dem äußeren Dichtabschnitt und dem inneren Dichtabschnitt in axialer Richtung und/oder in radialer Richtung, ohne dass die Dichtwirkung beeinträchtigt wird. Vorzugsweise ermöglicht der Kompensatorabschnitt eine Änderung des Anstellungswinkels zwischen dem äußeren Dichtabschnitt und dem inneren Dichtabschnitt, ohne dass die Dichtwirkung beeinträchtigt wird.

Der erfindungsgemäße Dichtungseinsatz weist mehrere innere Dichtabschnitte zum Abdichten gegen Leitungen unterschiedlichen Durchmessers auf. Die Einsatzmöglichkeiten des Dichtungseinsatzes werden durch die mehreren inneren Dichtabschnitte unterschiedlichen Durchmessers erheblich erweitert. Ein und derselbe Dichtungseinsatz kann somit für die Abdichtung einer Ausnehmung gegenüber verschiedenen Leitungen eingesetzt werden. Da bei der Gebäudeabdichtung eine Vielzahl unterschiedlicher Leitungen gegenüber Ausnehmungen in Bewandungsabschnitten abgedichtet werden müssen, kommt es somit zu einer erheblichen Kosteneinsparung, da die Herstellung verschiedener Dichtungseinsätze nicht länger notwendig ist. Ferner wird das Risiko eines unsachgemäßen Einbaus beziehungsweise einer unsachgemäßen Montage des Dichtungseinsatzes verringert, da dem zuständigen Monteur die zuvor erforderliche Auswahl eines geeigneten Dichtungseinsatzes aus einer Vielzahl von unterschiedlichen Dichtungseinsatztypen abgenommen wird.

Der erfindungsgemäße Dichtungseinsatz wird ferner dadurch vorteilhaft weitergebildet, dass der Kompensatorabschnitt rotationssymmetrisch ausgebildet ist. Durch die rotationssymmetrische Ausbildung des Kompensatorabschnitts führt eine axiale Bewegung der Leitung, gegen welche der Dichtungseinsatz abdichtet, zu einer gleichmäßigen Verformung des Kompensatorabschnitts. Es kommt somit zu einer gleichmäßigen Beanspruchung des Kompensatorabschnitts über den gesamten Umfang, sodass das Risiko einer Beschädigung durch eine bereichsweise auftretende Mehrbelastung oder Überbelastung verringert wird.

In einer besonders bevorzugten Ausführungsform des erfindungsgemäßen Dichtungseinsatzes umfasst der Kompensatorabschnitt eine einfach oder mehrfach gefaltete Membran. Durch eine Membranfaltung kann auf besonders einfache Art und Weise die Längenveränderlichkeit des Kompensatorabschnitts erreicht werden. Neben der Längenveränderlichkeit wird durch die Membranfaltung ebenfalls eine Flexibilität erreicht, welche eine Radialbewegung und eine Neigungsänderung der Leitung, gegen welche der Dichtungseinsatz abdichtet, aufgenommen und somit kompensiert werden kann.

Vorzugsweise ist der Kompensatorabschnitt einstückig mit dem Dichtkörper ausgebildet, welcher den äußeren Dichtabschnitt und die inneren Dichtabschnitte trägt. Ist der Dichtkörper mehrteilig ausgebildet, ist der Kompensatorabschnitt vorzugsweise einstückig mit einem Dichtkörperteil ausgebildet. Durch die einstückige Ausbildung des Kompensatorabschnitts mit dem Dichtkörper oder einem Dichtkörperteil wird die Herstellung eines separaten Teils, welches den Kompensatorabschnitt trägt, vermieden. Außerdem wird der Zusammenbau und die Montage des Dichtungseinsatzes durch die einstückige Ausbildung des Kompensatorabschnitts mit dem Dichtkörper oder einem Dichtkörperteil vereinfacht.

In einer vorteilhaften Weiterbildung des erfindungsgemäßen Dichtungseinsatzes weist der Kompensatorabschnitt mehrere koaxial angeordnete Ringabschnitte unterschiedlichen Durchmessers auf, wobei benachbarte Ringabschnitte vorzugsweise mittels eines gebogenen Faltenabschnitts verbunden sind,

In einer weiteren bevorzugten Ausführungsform des erfindungsgemäßen Dichtungseinsatzes weisen die mehreren inneren Dichtabschnitte im Wesentlichen ringförmige Querschnitte unterschiedlichen Durchmessers auf und sind im Wesentlichen koaxial zueinander angeordnet.

Eine bevorzugte Ausführungsform des erfindungsgemäßen Dichtungseinsatzes weist eine zweite Spanneinrichtung zum Verspannen eines inneren Dichtabschnitts der inneren mehreren Dichtabschnitte auf. Vorzugsweise ist der äußere Dichtabschnitt zur Vermeidung einer Beeinflussung durch die zweite Spanneinrichtung von den inneren Dichtabschnitten entkoppelt. Es kommt somit zu einer vollständigen Entkopplung des äußeren Dichtabschnitts und der inneren Dichtabschnitte hinsichtlich ihrer Verspannung. Vorzugsweise ist die zweite Spanneinrichtung als umlaufende Verspannmanschette ausgebildet, deren flexibles Stahlband um den Dichtkörper umläuft, welcher die inneren Dichtabschnitte trägt, wobei der Durchmesser des umlaufenden Stahlbandes durch eine Feststelleinrichtung, wie beispielsweise eine Spannschelle oder Schnalle, eingestellt werden kann.

Der erfindungsgemäße Dichtungseinsatz wird ferner dadurch vorteilhaft weitergebildet, dass die mehreren inneren Dichtabschnitte axial versetzt zueinander angeordnet sind. Durch den axialen Versatz der inneren Dichtabschnitte verringert sich der notwendige Verstellweg der zweiten Spanneinrichtung, da die zweite Spanneinrichtung direkt auf den Abschnitt des Dichtkörpers aufgesetzt werden kann, welcher den zur Abdichtung notwendigen inneren Dichtabschnitt trägt. Durch die axiale Beabstandung der inneren Dichtabschnitte sind die einzelnen Dichtabschnitte für den Monteur ferner auch leichter zugänglich, wodurch die Handhabung des Dichtungseinsatzes und dessen Montage vereinfacht ist.

Erfindungsgemäß sind benachbarte innere Dichtabschnitte des erfindungsgemäßen Dichtungseinsatzes mittels Stegabschnitte verbunden. Die Stegabschnitte, weiche benachbarte innere Dichtabschnitte verbinden, sind vorzugsweise von außen zugänglich. Vorzugsweise sind die Stegabschnitte derart ausgebildet, dass sie durch Werkzeugeinsatz vom Monteur durchstochen werden können. Nachdem der Stegabschnitt an einer Stelle durchstochen wurde, kann der Stegabschnitt durch Zugkraftaufbringung auf einen oder mehrere herauszulösende innere Dichtabschnitte eingerissen werden. Spitze und gleichzeitig unscharfe Werkzeuge, wie beispielsweise Schraubendreher, sind zum Durchstechen der Stegabschnitte bevorzugt, da deren Verwendung nicht das Risiko eines unbeabsichtigten Einschneidens in einen Dichtabschnitt birgt. Vorzugsweise sind die Stegabschnitte derart ausgebildet, dass beim Knicken eines Stegabschnitts ein Riss innerhalb des geknickten Stegabschnitts hervorgerufen wird. Der Riss innerhalb des Stegabschnitts ist durch Zugkraftaufbringung auf einen oder mehrere herauszulösende innere Dichtabschnitte entlang des Stegabschnitts ausweitbar. Durch das Durchtrennen eines Stegabschnitts, welcher zwei benachbarte innere Dichtabschnitte miteinander verbindet, können somit ein oder mehrere Dichtabschnitte aus dem Dichtkörper herausgelöst werden. Auf diese Weise können innere Dichtabschnitte mit einem Durchmesser, welcher für die Abdichtung der abzudichtenden Leitung zu gering ist, aus dem Dichtkörper entfernt werden, sodass eine Abdichtung der abzudichtenden Leitung mit einem inneren Dichtabschnitt, welcher einen geeigneten Durchmesser aufweist, erfolgen kann.

In einer besonders bevorzugten Ausführungsform des erfindungsgemäßen Dichtungseinsatzes sind die Stegabschnitte derart ausgebildet, dass diese durch Zugkraftaufbringung direkt einreißbar sind. Auf diese Weise kann der Dichtungseinsatz auch ohne Werkzeugeinsatz schnell an die abzudichtende Leitung angepasst werden. Dadurch, dass die Stegabschnitte durch Zugkraftaufbringung einreißbar sind, wird der Einsatz von zusätzlichen Werkzeugen, wie Schraubendrehern, gänzlich vermieden. Somit ist die Anpassung des Dichtungseinsatzes an die abzudichtende Leitung weiter vereinfacht.

Vorzugsweise ist der Dichtkörper einteilig oder mehrteilig ausgebildet. Ist der Dichtkörper einteilig ausgebildet, trägt der einteilige Dichtkörper sowohl den inneren Dichtabschnitt als auch den äußeren Dichtabschnitt. Ist der Dichtkörper mehrteilig ausgebildet, tragen ein oder mehrere Dichtkörperteile den inneren Dichtabschnitt und ein oder mehrere weitere Dichtkörperteil den äußeren Dichtabschnitt. Vorzugsweise ist zwischen den Dichtkörperteilen oder ober- oder unterhalb von dem Dichtkörper, welche den äußeren Dichtabschnitt tragen, ein Verspannbereich des Dichtkörperteils einklemmbar, welches die inneren Dichtabschnitte trägt.

Gemäß der Erfindung weist die erste Spanneinrichtung des erfindungsgemäßen Dichtungseinsatzes zwei relativ zueinander bewegbare Spannkörper zum Verspannen des äußeren Dichtabschnitts auf.

Vorzugsweise weisen die Spannkörper der ersten Spanneinrichtung jeweils mehrere, insbesondere 4, 5 oder 6 Durchgangsbohrungen auf. Durch die Durchgangsbohrungen erstrecken sich vorzugsweise Schrauben, wobei die Verspannung der Spannkörper vorzugsweise über entsprechende Muttern erfolgt.

In einer weiteren bevorzugten Ausführungsform des erfindungsgemäßen Dichtungseinsatzes weist die zweite Spanneinrichtung zwei relativ zueinander bewegbare Spannkörper zum Verspannen eines inneren Dichtabschnitts der mehreren inneren Dichtabschnitte auf.

Erfindungsgemäß weist zumindest ein Spannkörper der ersten Spanneinrichtung eine Stützfläche auf, welche den Dichtkörper in radialer Richtung nach innen abstützt, welcher den Dichtabschnitt trägt. Vorzugsweise weisen beide Spannkörper der ersten Spanneinrichtung eine Stützfläche auf, welche den Dichtkörper in radialer Richtung nach innen abstützt. Durch die radiale Abstützung des Dichtkörpers nach innen wird eine Ausdehnung des Dichtkörpers in radialer Richtung nach innen verhindert oder zumindest erheblich reduziert. Durch die Verhinderung oder Reduzierung der Ausdehnung des Dichtkörpers in radialer Richtung nach innen wird erreicht, dass aus der gesamten oder zumindest aus einem Großteil der zur Verspannung des äußeren Dichtabschnitts aufgebrachten Verspannkraft eine radiale Ausdehnung des Dichtkörpers nach außen erfolgt und somit die notwendige Verspannkraft reduziert wird.

In einer besonders bevorzugten Ausführungsform des erfindungsgemäßen Dichtungseinsatzes umfasst die Stützfläche des zumindest einen Spannkörpers der ersten Spanneinrichtung einen parallel zu dem äußeren Dichtabschnitt verlaufenden Stützabschnitt. Alternativ oder zusätzlich umfasst die Stützfläche des zumindest einen Spannkörpers der ersten Spanneinrichtung einen geneigt zu dem äußeren Dichtabschnitt verlaufenden Stützabschnitt. Insbesondere der zu dem äußeren Dichtabschnitt geneigt verlaufende Stützabschnitt der Stützfläche des zumindest einen Spannkörpers der ersten Spanneinrichtung führt zu einer weiteren Verringerung der notwenigen Verspannkraft, da die Ausdehnung des Dichtkörpers in radialer Richtung nach außen durch die Neigung des Stützabschnitts weiter gefördert wird.

Vorzugsweise begrenzt ein Anschlag die Verspannung des äußeren Dichtabschnitts. Dadurch, dass der Dichtungseinsatz mit einem Anschlag ausgestattet ist, kommt es zu einer konstruktiven Begrenzung der Verspannung des äußeren Dichtabschnitts. Eine Schraubverbindung kann somit beispielsweise intuitiv "auf Anschlag" festgezogen werden, sodass die Notwendigkeit des Einsatzes von Spezialwerkzeug entfällt. Auf diese Weise wird das Risiko einer zu geringen oder einer überhöhten Verspannung des äußeren Dichtabschnitts erheblich verringert.

Vorzugsweise begrenzt ein Anschlag die Verspannung eines inneren Dichtabschnitts der mehreren inneren Dichtabschnitten. Dadurch, dass auch beim Verspannen eines inneren Dichtabschnitts der mehreren inneren Dichtabschnitte ein Anschlag Verwendung findet, kann nunmehr sowohl der äußere Dichtabschnitt als auch ein innerer Dichtabschnitt der mehreren inneren Dichtabschnitte auf konkrete Verspannwerte eingestellt werden, ohne dass die Verwendung von Spezialwerkzeug erforderlich ist. Dies führt zu einem verringerten Montageaufwand und erweitert die Einsatzmöglichkeiten des Dichtungseinsatzes.

In einer besonders bevorzugten Ausführungsform des erfindungsgemäßen Dichtungseinsatzes weisen die Spannkörper der ersten Spanneinrichtung jeweils eine Pressfläche auf, wobei die Pressflächen relativ zueinander bewegbar sind. Zwischen den Pressflächen ist ein formveränderlicher Dichtkörper ausgebildet, wobei der Dichtkörper den äußeren Dichtabschnitt trägt. Die Pressflächen der Spannkörper der ersten Spanneinrichtung sind vorzugsweise senkrecht zu der Bewegungsachse der Spannkörper der ersten Spanneinrichtung ausgerichtet. Alternativ weisen die Pressflächen der Spannkörper der ersten Spanneinrichtung einen Winkel im Bereich von 35 bis 55 Grad gegenüber einer Ebene auf, welche senkrecht zu der Bewegungsachse der Spannkörper der ersten Spanneinrichtung ausgerichtet ist. In einer besonders bevorzugten Ausführungsform entspricht dieser Winkel etwa 45 Grad. Die Spannkörper der ersten Spanneinrichtung sind vorzugsweise aus Kunststoff oder Metall ausgebildet. Der formveränderliche Dichtkörper ist vorzugsweise aus einem Elastomermaterial ausgebildet. Insbesondere weist der äußere Dichtabschnitt eine zylinderförmige äußere Mantelfläche auf.

In einer vorteilhaften Ausführungsform des erfindungsgemäßen Dichtungseinsatzes weisen die Spannkörper der ersten Spanneinrichtung jeweils eine Anschlagsfläche auf, wobei die Anschlagsflächen relativ zueinander bewegbar sind. Die Anschlagsflächen schlagen in einer Anschlagsposition entweder aneinander oder an dem Dichtkörper an. Durch ein Abstimmen der Geometrie der Spannkörper der ersten Spanneinrichtung an die Geometrie des Dichtkörpers lässt sich die maximale Verformung, welche beim Anschlagen der Anschlagsflächen aneinander oder an dem Dichtkörper auftritt, festlegen. Auf diese Weise wird die Verspannung des äußeren Dichtabschnitts begrenzt.

Ferner ist es bevorzugt, dass die Anschlagsflächen und die Pressflächen der Spannkörper der ersten Spanneinrichtung wirkverbunden sind, sodass eine Relativbewegung der Pressflächen der Spannkörper der ersten Spanneinrichtung zu einer Relativbewegung der Anschlagsflächen der Spannkörper der ersten Spanneinrichtung führt. Dies lässt sich auf einfache Art und Weise dadurch erreichen, dass die Spannkörper der ersten Spanneinrichtung jeweils einstückig ausgebildet sind und die Anschlagsfläche und die Pressfläche eines Spannkörpers der ersten Spanneinrichtung an dessen Oberfläche ausgebildet sind.

Eine besonders bevorzugte Ausführungsform des erfindungsgemäßen Dichtungseinsatzes weist einen oder mehrere bewegbare Anschlagskörper auf, welche jeweils in einer Anschlagsposition an eine Anschlagsfläche anschlagen. Insbesondere bei einer rotationssymmetrischen Ausbildung des Dichtungseinsatzes ist es bevorzugt, dass mehrere Anschlagskörper auf einer Kreisbahn angeordnet sind, wobei nebeneinander angeordnete benachbarte Anschlagskörper jeweils äquidistant voneinander beabstandet sind. Vorzugsweise sind vier, fünf, sechs, sieben oder acht im Wesentlichen identische Anschlagskörper auf einer Kreisbahn um eine zentrale Mittelachse des Dichtungseinsatzes angeordnet. Vorzugsweise sind die Anschlagsflächen, gegen welche der eine oder die mehreren Anschlagskörper anschlagen, an einem der Spannkörper der ersten Spanneinrichtung ausgebildet.

Der erfindungsgemäße Dichtungseinsatz wird ferner dadurch vorteilhaft weitergebildet, dass der Anschlag der ersten Spanneinrichtung einstellbar ist. Die Einstellbarkeit des Anschlags der ersten Spanneinrichtung wird vorzugsweise durch die Auswahl von Anschlagskörpern einer geeigneten Länge oder durch das Verändern der Position der Anschlagsfläche für die Anschlagskörper erreicht. Vorzugsweise weist die Dichtungseinrichtung ein oder mehrere auswechselbare Anschlagsbuchsen auf, wobei die eine oder die mehreren Anschlagsbuchsen jeweils eine Anschlagsfläche für einen Anschlagskörper tragen. Vorzugsweise sind die verwendeten Anschlagsbuchsen identisch ausgebildet. Insbesondere weisen die Anschlagsbuchsen einen Bodenabschnitt auf, welcher die Anschlagsfläche für einen Anschlagskörper ausbildet. Vorzugsweise weisen die Spannkörper der ersten Spanneinrichtung oder die Anschlagsbuchsen Schlitze auf, durch welche weitere Bodenelemente einschiebbar sind. Auf diese Weise kann die Position der Anschlagsflächen variiert werden, sodass eine Einstellbarkeit der Spanneinrichtung realisiert ist.

Der erfindungsgemäße Dichtungseinsatz wird ferner dadurch vorteilhaft weitergebildet, dass die Pressflächen der Spannkörper der ersten Spanneinrichtung mit dem einen oder den mehreren Anschlagskörpern wirkverbunden sind, sodass eine Bewegung des einen oder der mehreren Anschlagskörpern eine Relativbewegung der Pressflächen der Spannkörper der ersten Spanneinrichtung verursacht. Insbesondere verursacht eine Linearbewegung oder Rotationsbewegung des einen oder der mehreren Anschlagskörper eine Relativbewegung der Pressflächen der Spannkörper der ersten Spanneinrichtung. Die Relativbewegung der Pressflächen der Spannkörper der ersten Spanneinrichtung ist beispielsweise eine Annäherung der Spannkörper der ersten Spanneinrichtung zueinander, sodass eine Verpressung des zwischen den Spannkörpern der ersten Spanneinrichtung angeordneten Dichtkörpers erfolgt. Die Relativbewegung der Pressflächen der Spannkörper der ersten Spanneinrichtung kann ferner zu einer Vergrößerung des Abstands zwischen den Pressflächen der Spannkörper der ersten Spanneinrichtung führen, sodass der zwischen den Pressflächen der Spannkörper der ersten Spanneinrichtung angeordnete Dichtkörper bei der Bewegung des einen oder der mehreren Anschlagskörper entspannt wird und somit die Verpressung verringert oder aufgehoben wird.

In einer weiteren Ausführungsform des erfindungsgemäßen Dichtungseinsatzes weist ein Spannkörper der ersten Spanneinrichtung eine oder mehrere Gewindebohrungen auf. Der eine oder die mehreren Anschlagskörper umfassen jeweils einen Gewindeabschnitt, welcher mit einer Gewindebohrung verschraubbar ist. Vorzugsweise ist der eine oder sind die mehreren Anschlagskörper als Schrauben ausgebildet und erstrecken sich durch eine Durchgangsbohrung eines Spannkörpers der ersten Spanneinrichtung und greifen in den Gewindeabschnitt einer Gewindebohrung in dem anderen Spannkörper der ersten Spanneinrichtung. Ein Anziehen und somit eine rotatorische Bewegung des einen oder der mehreren Anschlagskörper verursacht so mit einer Relativbewegung der Pressflächen der Spannkörper der ersten Spanneinrichtung zueinander.

In einer vorteilhaften Weiterbildung des erfindungsgemäßen Dichtungseinsatzes weisen das eine oder die mehreren Gewindebohrungen jeweils ein Sackloch auf, wobei der Grund des Sacklochs als Anschlagsfläche für den Anschlagskörper ausgebildet ist. Vorzugsweise ist in dieser Ausführungsform der eine oder sind die mehreren Anschlagskörper als Schrauben ausgebildet, wobei die dem Schraubenkopf gegenüberliegende Stirnfläche der Schraube gegen den Grund des Sacklochs anschlägt. Der Anschlag zum Begrenzen der Verspannung wird somit durch das Anschlagen der dem Schraubenkopf gegenüberliegenden Stirnfläche der Schraube im Grund des Sacklochs erreicht.

In einer weiteren bevorzugten Ausführungsform des erfindungsgemäßen Dichtungseinsatzes weist der Dichtkörper, welcher den äußeren Dichtabschnitt trägt, eine oder mehrere umlaufende Erhebungen auf. Alternativ oder zusätzlich weist der Dichtkörper, welcher die inneren Dichtabschnitte trägt, eine oder mehrere umlaufende Erhebungen auf. Die umlaufenden Erhebungen sind vorzugsweise zur Führung einer Spanneinrichtung angepasst, beispielsweise zur Führung einer Verspannmanschette. Ferner können die umlaufenden Erhebungen dem zuständigen Monteur als Hinweis für die korrekte Positionierung einer Spanneinrichtung dienen.

Ausführungsbeispiele der Erfindung werden nun nachfolgend anhand der Figuren beschrieben. Diese sollen die Ausführungsbeispiele nicht notwendigerweise maßstäblich darstellen, vielmehr sind die Zeichnungen in schematischer Form ausgeführt.

Weitere Vorteile, Merkmale und Einzelheiten der Erfindung ergeben sich aus der nachfolgenden Beschreibung der bevorzugten Ausführungsformen sowie anhand der folgenden Figuren. Im Einzelnen zeigen:
- Fig. 1: ein Ausführungsbeispiel des erfindungsgemäßen Dichtungseinsatzes in einer perspektivischen Darstellung;
- Fig. 2a: Teile eines erfindungsgemäßen Dichtungseinsatzes in einer Schnittdarstellung;
- Fig. 2b: einen vergrößerten Ausschnitt aus Fig. 2a.
- Fig. 3a: Teile eines erfindungsgemäßen Dichtungseinsatzes in einer Schnittdarstellung;
- Fig. 3b: einen vergrößerten Ausschnitt aus Fig. 3a.
- Fig. 4: Teile eines erfindungsgemäßen Dichtungseinsatzes in einer geteilten Schnittdarstellung;
- Fig. 5: Teile eines erfindungsgemäßen Dichtungseinsatzes in einer geteilten Schnittdarstellung;
- Fig. 6a: eine weitere Ausführungsform des erfindungsgemäßen Dichtungseinsatzes in einer geteilten Schnittdarstellung;
- Fig. 6b: einen vergrößerten Ausschnitt aus Fig. 6a;
- Fig. 7a: eine weitere Ausführungsform des erfindungsgemäßen Dichtungseinsatzes in einer geteilten Schnittdarstellung;
- Fig. 7b: einen vergrößerten Ausschnitt aus Fig. 7a; und
- Fig. 8: Teile eines erfindungsgemäßen Dichtungseinsatzes, insbesondere Mehrfach-Dichtungseinsatzes, in einer perspektivischen Darstellung.

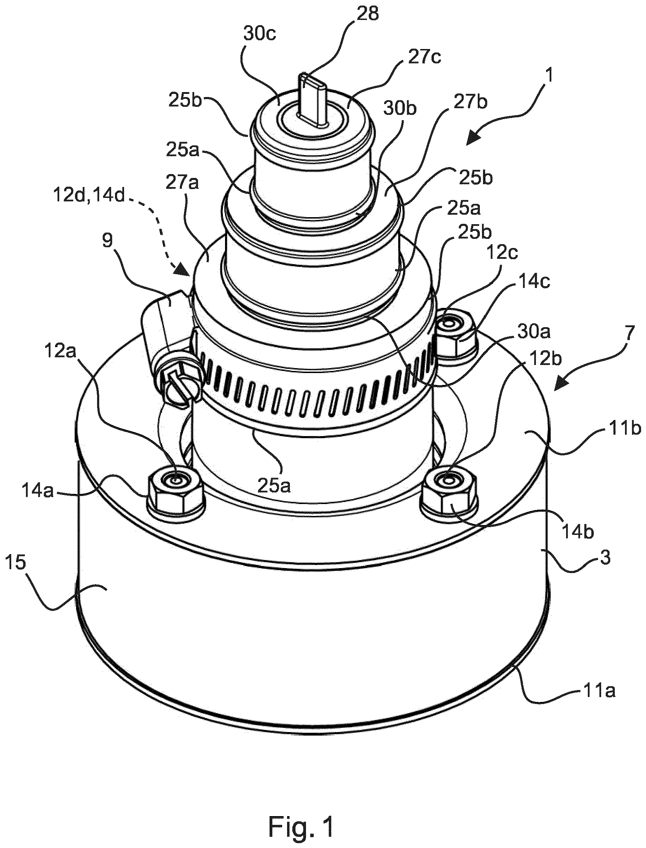

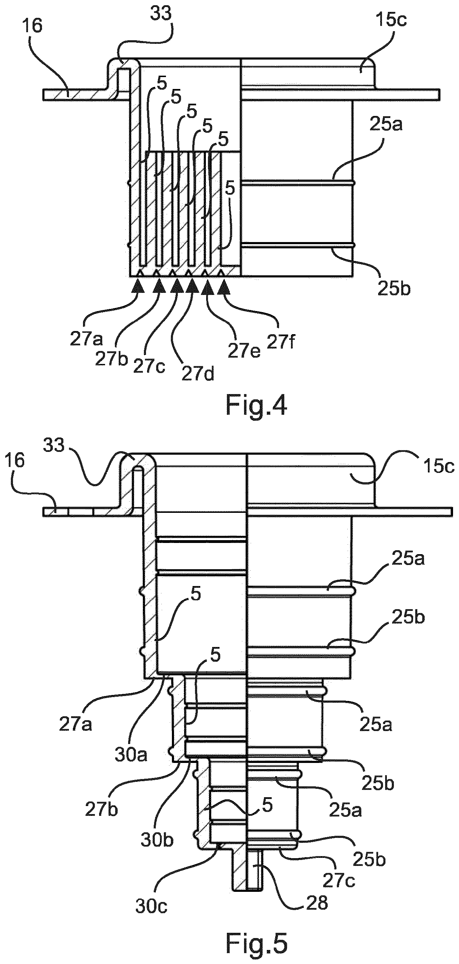

Gemäß Fig. 1 weist der erfindungsgemäße Dichtungseinsatz 1 einen äußeren Dichtabschnitt 3 zum Abdichten gegen eine Ausnehmung und drei innere Dichtabschnitte 5 (Fig. 5) unterschiedlichen Durchmessers zum Abdichten gegen Leitungen unterschiedlichen Durchmessers auf. Ferner umfasst der Dichtungseinsatz 1 eine erste Spanneinrichtung 7 zum Verspannen des äußeren Dichtabschnitts 3, wobei die inneren Dichtabschnitte zur Vermeidung einer Beeinflussung durch die erste Spanneinrichtung 7 von dem äußeren Dichtabschnitt 3 entkoppelt sind. Die erste Spanneinrichtung 7 weist zwei relativ zueinander bewegbare Spannkörper 11a, 11b zum Verspannen des äußeren Dichtabschnitts 3 auf.

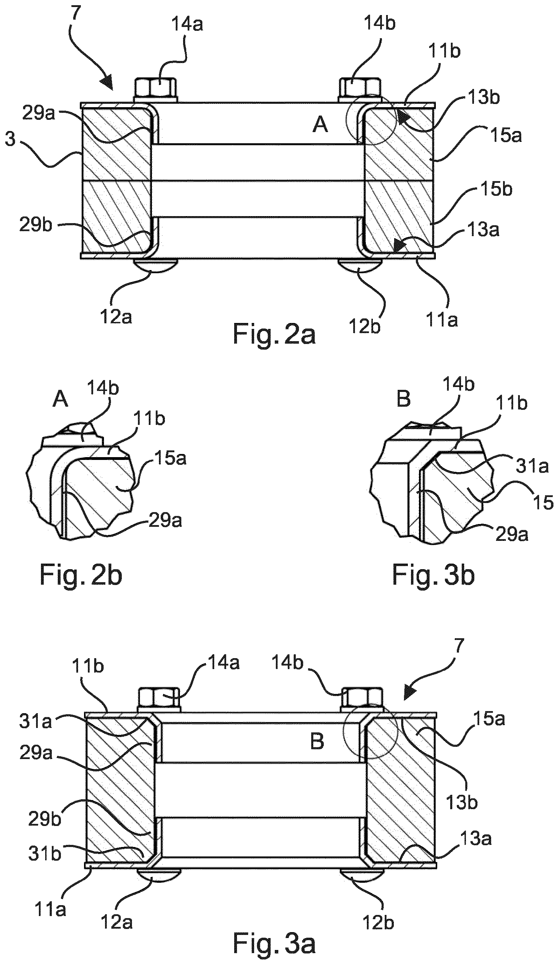

Die Spannkörper 11a, 11b der ersten Spanneinrichtung 7 weisen jeweils eine Pressfläche 13a,b (Fig. 2a) auf, wobei die Pressflächen relativ zueinander bewegbar sind und zwischen den Pressflächen ein formveränderlicher Dichtkörper 15 aus einem Elastomermaterial angeordnet ist, welcher den äußeren Dichtabschnitt 3 trägt. Die Spannkörper 11a, 11b weisen jeweils vier Durchgangsbohrungen auf. Durch die Durchgangsbohrungen erstrecken sich Schrauben 12a-12d, wobei die Verspannung der Spannkörper 11a, 11b über entsprechende Muttern 14a-14d erfolgt.

Die drei inneren Dichtabschnitte sind jeweils mittels einer zweiten Spanneinrichtung 9 fluiddicht mit einer Leitung verspannbar. Die drei inneren Dichtabschnitte weisen ringförmige Querschnitte unterschiedlichen Durchmessers auf und sind koaxial zueinander angeordnet. Der Dichtkörper 15 weist in den Bereichen der inneren Dichtabschnitte jeweils zwei umlaufende Erhebungen 25a, 25b auf. Die umlaufenden Erhebungen 25a, 25b dienen zur Ausrichtung der zweiten Spanneinrichtung 9.

Die drei inneren Dichtabschnitte 5 (Fig. 5) sind axial versetzt zueinander angeordnet. Außerdem sind die drei inneren Dichtabschnitte 5 über Stegabschnitte 27a, 27b miteinander verbunden. Ein dritter Steg 27c dient als Blinddeckel. Die Stegabschnitte 27a, 27b,c sind mittels eines Werkzeugs, wie beispielsweise einem Schraubendreher, durchstechbar und anschließend durch Zugkraftaufbringung einreißbar. An dem dritten Steg 27c ist ein Griff 28 angeformt, welcher zum Entfernen des Blinddeckels manuell greifbar ist. Die Stegabschnitte 27a-c sind mittels einer jeweiligen Sollbruchstelle 30a,b,c trennbar.

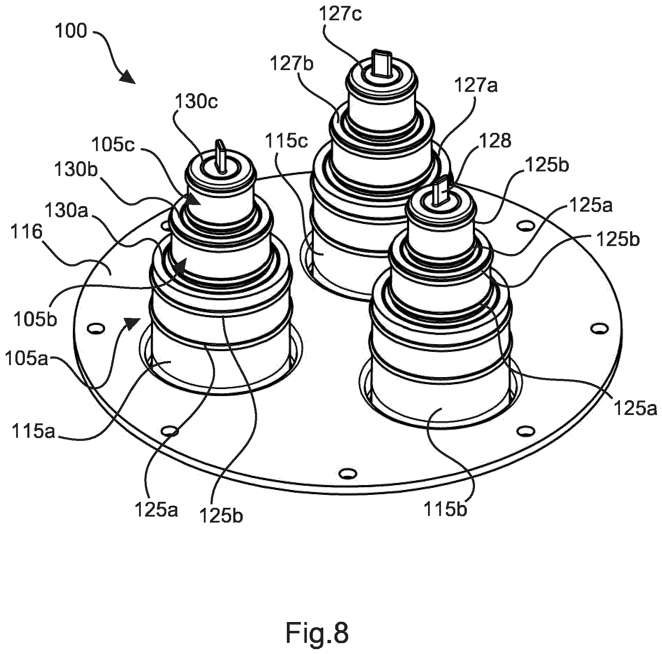

Gemäß Fig. 2a und Fig. 2b weist die erste Spanneinrichtung 7 zwei relativ zueinander bewegbare Spannkörper 11a, 11b zum Verspannen des äußeren Dichtabschnitts 3 mittels der Pressflächen 13a,b auf. Der Dichtkörper 15a, 15b ist mehrteilig ausgebildet. Die Dichtkörperteile 15a, 15b tragen den äußeren Dichtabschnitt 3. Zwischen den Dichtkörperteilen 15a, 15b ist ein Verspannbereich eines weiteren Dichtkörperteils (siehe beispielsweise Bezugszeichen 15c in Fig. 4 und Fig. 5, und 115c in Fig. 8) einklemmbar, wobei das weitere Dichtkörperteil die inneren Dichtabschnitte trägt. Die Spannkörper 11a, 11b der ersten Spanneinrichtung 7 weisen jeweils eine Stützfläche auf, welche den Dichtkörper 15a, 15b in radialer Richtung nach innen abstützen. Die Stützflächen umfassen parallel zu dem äußeren Dichtabschnitt 3 verlaufende Stützabschnitte 29a, 29b. Die Spannkörper 11a, 11b weisen jeweils vier Durchgangsbohrungen auf. Durch die Durchgangsbohrungen erstrecken sich Schrauben 12a, 12b, wobei die Verspannung der Spannkörper 11a, 11b über entsprechende Muttern 14a, 14b erfolgt.

Gemäß Fig. 3a und Fig. 3b weist die erste Spanneinrichtung 7 ebenfalls zwei relativ zueinander bewegbare Spannkörper 11a, 11b zum Verspannen des äußeren Dichtabschnitts 3 mittels der Pressfläche 13a,b auf. Der Dichtkörper 15 trägt den äußeren Dichtabschnitt 3. Oberhalb oder unterhalb des Dichtkörpers 15 ist ein Verspannbereich eines weiteren Dichtkörperteils (siehe beispielsweise Bezugszeichen 15c in Fig. 4 und Fig. 5, und 115c in Fig. 8) einklemmbar, wobei das weitere Dichtkörperteil die inneren Dichtabschnitte trägt. Die Spannkörper 11a, 11b der ersten Spanneinrichtung 7 weisen jeweils eine Stützfläche auf, welche den Dichtkörper 15 in radialer Richtung nach innen abstützen. Die Stützflächen umfassen parallel zu dem äußeren Dichtabschnitt 3 verlaufende Stützabschnitte 29a, 29b und geneigt zu dem äußeren Dichtabschnitt verlaufende Stützabschnitte 31a, 31b. Die Spannkörper 11a, 11b weisen jeweils vier Durchgangsbohrungen auf. Durch die Durchgangsbohrungen erstrecken sich Schrauben 12a, 12b, wobei die Verspannung der Spannkörper 11a, 11b über entsprechende Muttern 14a, 14b erfolgt.

Fig. 4 zeigt eine erste Ausführungsform eines vorstehend erwähnten weiteren Dichtkörperteils 15c. Der Verspannbereich 16 des Dichtkörperteils 15c ist über einen flexiblen und längenveränderlichen Kompensatorabschnitt 33 mit den inneren Dichtabschnitten 5 verbunden. Der Verspannbereich 16 ist zwischen weiteren Dichtkörperteilen (siehe beispielsweise Bezugseichen 15a, b in Fig. 2a und 2b) oder ober- oder unterhalb eines Dichtkörpers (siehe beispielsweise Bezugszeichen 15 in Fig. 3a und 3b) einklemmbar. Der Kompensatorabschnitt 33 ist rotationssymmetrisch ausgebildet und umfasst eine zweifach gefaltete Membran. Die sechs inneren Dichtabschnitte 5 weisen ringförmige Querschnitte unterschiedlichen Durchmessers auf und sind koaxial zueinander angeordnet. Das Dichtkörperteil 15c weist in dem Bereich des äußersten inneren Dichtabschnitts 5 zwei umlaufende Erhebungen 25a, 25b auf. Die umlaufenden Erhebungen 25a, 25b dienen zur Ausrichtung einer Spanneinrichtung. Die sechs inneren Dichtabschnitte 5 sind in radialer Richtung nebeneinander angeordnet und mit Stegabschnitten 27a bis 27f miteinander verbunden. Die Stegabschnitte 27a bis 27f sind mittels eines Werkzeugs, wie beispielsweise einem Schraubendreher, durchstechbar und anschließend durch Zugkraftaufbringung einreißbar.

Fig. 5 zeigt eine weitere Ausführungsform des vorstehend erwähnten weiteren Dichtkörperteils 15c. Der Verspannbereich 16 des weiteren Dichtkörperteils 15c ist über einen flexiblen und längenveränderlichen Kompensatorabschnitt 33 mit den inneren Dichtabschnitten 5 verbunden. Der Verspannbereich 16 ist zwischen weiteren Dichtkörperteilen (siehe Fig. 2a und 2b) oder ober- oder unterhalb eines Dichtkörpers (siehe Fig. 3a und 3b) einklemmbar. Der Kompensatorabschnitt 33 ist rotationssymmetrisch ausgebildet und umfasst eine zweifach gefaltete Membran. Die drei inneren Dichtabschnitte 5 weisen ringförmige Querschnitte unterschiedlichen Durchmessers auf und sind koaxial zueinander angeordnet. Das Dichtkörperteil 15c weist in den Bereichen der inneren Dichtabschnitte 5 jeweils zwei umlaufende Erhebungen 25a, 25b auf. Die umlaufenden Erhebungen 25a, 25b dienen zur Ausrichtung einer Spanneinrichtung. Die drei inneren Dichtabschnitte 5 sind axial versetzt zueinander angeordnet und mit Stegabschnitten 27a, 27b miteinander verbunden. Ein dritter Stegabschnitt 27c bildet einen Blinddeckel aus. Die Stegabschnitte 27a, 27b, 27c sind mittels eines Werkzeugs, wie beispielsweise einem Schraubendreher, an jeweiligen Sollbruchstellen 30a, b, c durchstechbar und anschließend durch Zugkraftaufbringung einreißbar. An dem dritten Stegabschnitt 27c ist ein Griff 28 angeformt, welcher vom Monteur des Dichtungseinsatzes 1 zum Entfernen des Blinddeckels manuell greifbar ist.

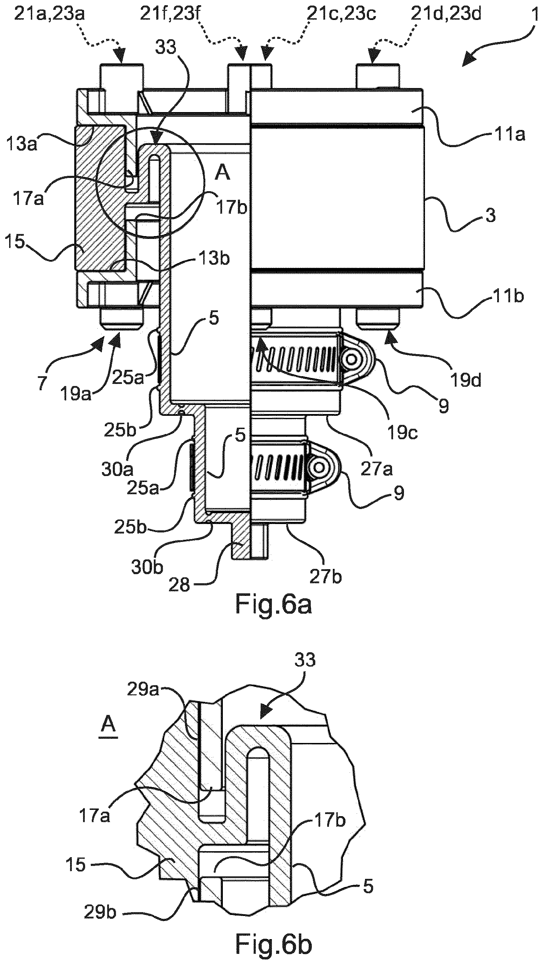

Gemäß Fig. 6a und Fig. 6b weist der Dichtungseinsatz 1 einen äußeren Dichtabschnitt 3 zum Abdichten gegen eine Ausnehmung und zwei innere Dichtabschnitte 5 zum Abdichten gegen Leitungen unterschiedlichen Durchmessers auf.

Der Dichtungseinsatz 1 umfasst ferner eine erste Spanneinrichtung 7 zum Verspannen des äußeren Dichtabschnitts 3, wobei die inneren Dichtabschnitte 5 zur Vermeidung einer Beeinflussung durch die erste Spanneinrichtung 7 von dem äußeren Dichtabschnitt 3 entkoppelt sind. Die erste Spanneinrichtung 7 weist zwei relativ zueinander bewegbare Spannkörper 11a, 11b zum Verspannen des äußeren Dichtabschnitts 3 auf.

Beide Spannkörper 11a, 11b der ersten Spanneinrichtung 7 weisen eine Stützfläche auf, welche den Dichtkörper 15 in radialer Richtung nach innen abstützt. Die Stützflächen der beiden Spannkörper 11a, 11b umfassen jeweils einen parallel zu dem äußeren Dichtabschnitt 3 verlaufenden Stützabschnitt 29a, 29b

Der äußere Dichtabschnitt 3 ist über einen flexiblen und längenveränderlichen Kompensatorabschnitt 33 mit den inneren Dichtabschnitten 5 verbunden. Der Kompensatorabschnitt 33 ist rotationssymmetrisch ausgebildet und umfasst eine zweifach gefaltete Membran.

Die Spannkörper 11a, 11b der ersten Spanneinrichtung 7 weisen jeweils eine Pressfläche 13a, 13b auf. Die Pressflächen 13a, 13b sind relativ zueinander bewegbar, wobei zwischen den Pressflächen 13a, 13b ein formveränderlicher Dichtkörper 15 angeordnet ist, welcher den äußeren Dichtabschnitt 3 trägt. Der formveränderliche Dichtkörper 15 ist aus einem Elastomermaterial ausgebildet. Die bewegbaren Spannkörper 11a, 11b der ersten Spanneinrichtung 7 sind aus einem formstabilen Kunststoff ausgebildet.

Die Spannkörper 11a, 11b der ersten Spanneinrichtung weisen jeweils eine Anschlagsfläche 17a, 17b auf, wobei die Anschlagsflächen 17a, 17b relativ zueinander bewegbar sind. Die Anschlagsflächen 17a, 17b schlagen in einer Anschlagsposition an dem Dichtkörper 15 an.

Dadurch, dass die Anschlagsflächen 17a, 17b und die Pressflächen 13a, 13b als Oberflächenabschnitte der jeweils einstückig ausgebildeten Spannkörper 11a, 11b der ersten Spanneinrichtung 7 ausgebildet sind, führt eine Relativbewegung der Pressflächen 13a, 13b gleichzeitig zu einer Relativbewegung der Anschlagsflächen 17a, 17b.

Alternativ oder zusätzlich zu dem Anschlag der Anschlagsflächen 17a, 17b an dem Dichtkörper 15 ist ein weiterer Anschlag auch durch die sechs bewegbaren Anschlagskörper 19 bis 19f realisierbar. Bei einer entsprechenden Ausbildung des Dichtungseinsatzes 1 schlagen die Anschlagskörper 19a bis 19f jeweils in einer Anschlagsposition an einer Anschlagsfläche 21a bis 21f an. Die Anschlagskörper 19a bis 19f sind als Schrauben ausgebildet und erstrecken sich durch eine Durchgangsbohrung des unteren Spannkörpers 11b und greifen jeweils in eine Gewindebohrung 23a bis 23f in dem oberen Spannkörper 11a. Die Gewindebohrungen 23a bis 23f weisen ein Sackloch auf, wobei der Grund des Sacklochs als Anschlagsfläche 21a bis 21f für die jeweiligen Anschlagskörper 19a bis 19f ausgebildet ist.

Die Pressflächen 13a, 13b der Spannkörper 11a, 11b der ersten Spanneinrichtung 7 sind mit den Anschlagskörpern 19a bis 19f wirkverbunden, sodass eine Bewegung, nämlich eine Rotation der Anschlagskörper 19a bis 19f eine Relativbewegung der Pressflächen 13a, 13b der Spannkörper 11a, 11b der ersten Spanneinrichtung 7 verursacht. Eine Rotationsbewegung der Anschlagskörper 19a bis 19f führt folglich entweder zu einer Annäherung der Spannkörper 11a, 11b der ersten Spanneinrichtung 7 oder zu einer Vergrößerung des Abstands zwischen den Spannkörpern 11a, 11b der ersten Spanneinrichtung 7.

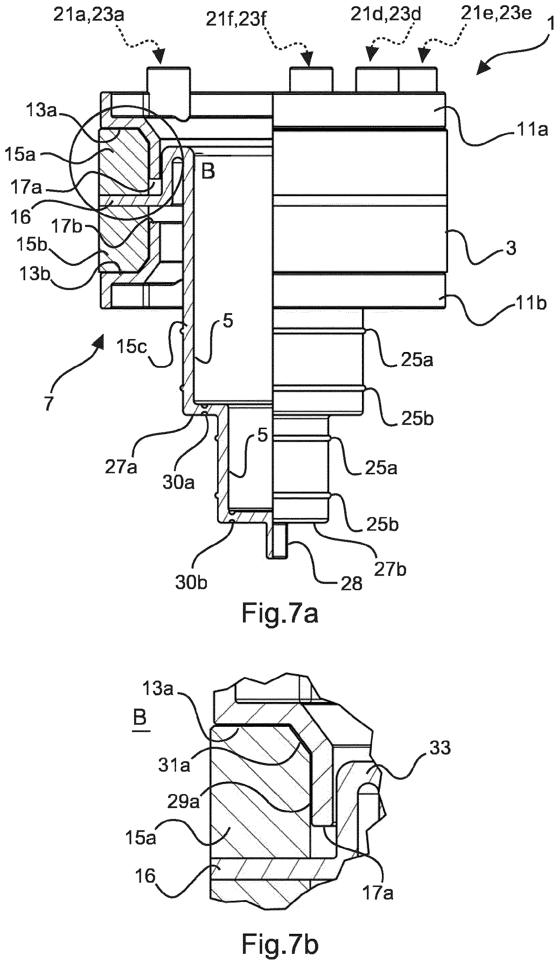

Gemäß Fig. 7a und Fig. 7b weist der Dichtungseinsatz 1 zwei innere Dichtabschnitte 5 auf, welche axial versetzt zueinander angeordnet sind. Die Dichtabschnitte 5 sind über einen Stegabschnitt 27a miteinander verbunden. Ein zweiter Stegabschnitt 27b bildet einen Blinddeckel. Die Stegabschnitte 27a,b sind mittels eines Werkzeugs, wie beispielsweise einem Schraubendreher, an einer jeweiligen Sollbruchstelle 30a,b durchstechbar und anschließend durch Zugkraftaufbringung, einreißbar. An dem zweiten Stegabschnitt 27b ist ein Griff 28 angeformt und dient zum Entfernen des Blinddeckels.

Der Dichtkörper 15a, 15b, 15c ist dreiteilig ausgebildet, wobei die beiden Dichtkörperteile 15a, 15b den äußeren Dichtabschnitt 3 bilden und das dritte Dichtkörperteil 15c die inneren Dichtabschnitte 5 aufweist. Das dritte Dichtkörperteil 15c ist mit einem Flanschabschnitt 16 zwischen den ersten und zweiten Dichtkörperteilen 15a, 15b eingeklemmt und mittels der Spannkörper 11a, 11b zwischen den Dichtkörperteilen 15a, 15b verspannt.

Beide Spannkörper 11a, 11b der ersten Spanneinrichtung 7 weisen jeweils eine Stützfläche auf, welche das erste Dichtkörperteil 15a und das zweite Dichtkörperteil 15b in radialer Richtung nach innen abstützt. Die Stützflächen der beiden Spannkörper 11a, 11b umfassen jeweils einen parallel zu dem äußeren Dichtabschnitt 3 verlaufenden Stützabschnitt 29a, 29b und einen geneigt zu dem äußeren Dichtabschnitt 3 verlaufenden Stützabschnitt 31a, 31b.

Während die Ausführungsformen der Figuren 1 bis 7b auf Einfach-Dichtungseinsätze gerichtet waren, zeigt Figur 8 beispielhaft die Anwendung des erfindungsgemäßen Konzepts auf Mehrfach-Dichtungseinsätze. Für einen Mehrfach-Dichtungseinsatz 100 steht als erste Spanneinrichtung beispielsweise eine Spanneinrichtung 7 gemäß den Figuren 2a, 3a, 7a zur Verfügung.

Anstelle von einem einzelnen weiteren Dichtkörperteil sind in diesem Ausführungsbeispiel allerdings an einem gemeinsamen Flanschabschnitt 116 zur Montage an der Spanneinrichtung drei weitere Dichtkörperteile 115a,b,c ausgebildet. Somit ist ein Dichtungseinsatz 100 zum Durchführen mehrerer Leitungen gleichzeitig eingerichtet. Jeder der weiteren Dichtkörperteile 115a-c ist vorzugsweise analog zu dem Ausführungsbeispiel gemäß Figur 5 ausgebildet. Alternativ ist beziehungsweise sind eines oder mehrere oder sämtliche der Dichtkörperteile 115a-c beispielsweise gemäß dem Ausführungsbeispiel nach Figur 4 ausgebildet (nicht gezeigt).

Die Dichtkörperteile 115a-c weisen im Bereich ihrer inneren Dichtabschnitte 105 jeweils zwei umlaufende Erhebungen 125a,b auf, die zur Ausrichtung etwaiger außen montierbarer Spanneinrichtungen dienen. Die Dichtkörperteile 115a-c weisen jeweils mehrere Dichtabschnitte 105a-c auf, die jeweils über Stegabschnitte 127a,b,c miteinander verbunden sind. Der an dem kleinsten, dritten Dichtabschnitt 105c angeordnete Stegabschnitt 127c dient als Blinddeckel. Die Stegabschnitte 127a-c sind mittels eins Werkzeugs, beispielsweise eines Schraubendrehers, vorzugsweise an einer jeweiligen Sollbruchstelle 130a-c durchstechbar und anschließend durch Zugkraftaufbringung einreißbar. An dem dritten Steg 127c ist ein Griff 128 angeformt, welcher zum Entfernen des Blinddeckels manuell greifbar ist.

### Bezugszeichen

- 1: Dichtungseinsatz
- 3: äußerer Dichtabschnitt
- 5: innerer Dichtabschnitt
- 7: erste Spanneinrichtung
- 9: zweite Spanneinrichtung
- 11a, 11b: Spannkörper der ersten Spanneinrichtung
- 12a - 12d: Schrauben
- 13a, 13b: Pressflächen der Spannkörper
- 14a - 14d: Muttern
- 15, 15a - 15c: Dichtkörper
- 16: Flanschabschnitt
- 17a, 17b: Anschlagsflächen
- 19a -19f: Anschlagskörper
- 21a - 21f: Anschlagsflächen
- 23a - 23f: Gewindebohrungen
- 25a, 25b: Erhebungen
- 27a- 27f: Stegabschnitte
- 28: Griff
- 29a, 29b: Stützflächen
- 30, 30a-c: Sollbruchstelle
- 31a, 31b: Stützflächen
- 33: Kompensatorabschnitt
- 100: Mehrfach-Dichtungseinsatz
- 105a-c: Dichtabschnitte
- 115a-c: Dichtkörper, Dichtkörperteil
- 116: Flanschabschnitt
- 125a,b: Erhebungen
- 127a-c: Stegabschnitte
- 128: Griff
- 130a-c: Sollbruchstelle

## Patentansprüche

1. Dichtungseinsatz (1, 100) zum Abdichten einer Leitung gegenüber einer Ausnehmung in einem Wandabschnitt einer Gebäudewandung, mit
- einem äußeren Dichtabschnitt (3) zum Abdichten gegen die Ausnehmung,
- einem Dichtkörper (15), welcher den äußeren Dichtabschnitt (3) trägt,
- mehreren inneren Dichtabschnitten (5) zum Abdichten gegen Leitungen unterschiedlichen Durchmessers,
- einer ersten Spanneinrichtung (7) zum Verspannen des äußeren Dichtabschnitts (3), wobei die inneren Dichtabschnitte (5) zur Vermeidung einer Beeinflussung durch die erste Spanneinrichtung (7) von dem äußeren Dichtabschnitt (3) entkoppelt sind, wobei die erste Spanneinrichtung (7) zwei relativ zueinander bewegbare Spannkörper (11a, 11b) zum Verspannen des äußeren Dichtabschnitts (3) aufweist, und
- einem flexiblen und längenveränderlichen Kompensatorabschnitt (33), welcher den äußeren Dichtabschnitt und die inneren Dichtabschnitte (5) verbindet, wobei zumindest einer der Spannkörper (11a, 11b) eine Stützfläche (29a, 29b, 31a, 31b) aufweist, welche den Dichtkörper (15) in radialer Richtung nach innen abstützt, wodurch eine Ausdehnung des Dichtkörpers (15) in radialer Richtung nach innen verhindert oder erheblich reduziert wird, sodass aus der gesamten oder zumindest aus einem Großteil der zum Verspannen des äußeren Dichtabschnitts (3) aufgebrachten Verspannkraft eine radiale Ausdehnung des Dichtkörpers (15) nach außen bewirkt ist, und wobei benachbarte innere Dichtabschnitte (5) mittels Stegabschnitte (27a - 27e) verbunden sind.

2. Dichtungseinsatz (1) nach Anspruch 1,
**dadurch gekennzeichnet, dass** der Kompensatorabschnitt (33) rotationssymmetrisch ausgebildet ist.

3. Dichtungseinsatz (1) nach Anspruch 1 oder 2,
**dadurch gekennzeichnet, dass** der Kompensatorabschnitt (33) eine einfach oder mehrfach gefaltete Membran umfasst.

4. Dichtungseinsatz (1) nach einem der vorstehenden Ansprüche,
**dadurch gekennzeichnet, dass** der Kompensatorabschnitt (33) mehrere koaxial angeordnete Ringabschnitte unterschiedlichen Durchmessers aufweist, wobei benachbarte Ringabschnitte vorzugsweise mittels eines gebogenen Faltenabschnitts verbunden sind.

5. Dichtungseinsatz (1) nach einem der vorstehenden Ansprüche,
**dadurch gekennzeichnet, dass** die mehreren inneren Dichtabschnitte (5) im Wesentlichen ringförmige Querschnitte unterschiedlichen Durchmessers aufweisen und im Wesentlichen koaxial angeordnet sind.

6. Dichtungseinsatz (1) nach einem der vorstehenden Ansprüche,
**dadurch gekennzeichnet, dass** die mehreren inneren Dichtabschnitte (5) axial versetzt zueinander angeordnet sind.

7. Dichtungseinsatz (1) nach einem der vorstehenden Ansprüche,
**gekennzeichnet durch** eine zweite Spanneinrichtung (9) zum Verspannen eines inneren Dichtabschnitts (5) der mehreren inneren Dichtabschnitte (5).

8. Dichtungseinsatz (1) nach einem der vorstehenden Ansprüche,
**dadurch gekennzeichnet, dass** beide Spannkörper (11a, 11b) der ersten Spanneinrichtung (7) eine Stützfläche (29a, 29b, 31a, 31b) aufweisen, welche den Dichtkörper (15) in radialer Richtung nach innen abstützt.

9. Dichtungseinsatz (1) nach einem der vorstehenden Ansprüche,
**dadurch gekennzeichnet, dass** die Stützfläche (29a, 29b, 31a, 31b) einen parallel zu dem äußeren Dichtabschnitt (3) verlaufenden Stützabschnitt (29a, 29b) und/oder einen geneigt zu dem äußeren Dichtabschnitt verlaufenden Stützabschnitt (31a, 31b) umfasst.

10. Dichtungseinsatz (1) nach einem der vorstehenden Ansprüche,
**dadurch gekennzeichnet, dass** ein Anschlag den Abstand zwischen den Spannkörpern (11a, 11b) der ersten Spanneinrichtung (7) und die Verspannung des äußeren Dichtabschnitts (3) begrenzt.

11. Dichtungseinsatz (1) nach einem der vorstehenden Ansprüche,
**dadurch gekennzeichnet, dass** die Spannkörper (11a, 11b) der ersten Spanneinrichtung (7) jeweils eine Anschlagsfläche (17a, 17b) aufweisen, wobei die Anschlagsflächen (17a, 17b) relativ zueinander bewegbar sind und in einer Anschlagsposition aneinander oder an dem Dichtkörper (15) anschlagen.

12. Dichtungseinsatz (1) nach einem der vorstehenden Ansprüche,
**gekennzeichnet durch** einen oder mehrere bewegbare Anschlagskörper (19a -19f), welche jeweils in einer Anschlagsposition an einer Anschlagsfläche (21a - 21f) anschlagen.

13. Dichtungseinsatz (1) nach Anspruch 12,
**dadurch gekennzeichnet, dass** ein Spannkörper (11a, 11b) der ersten Spanneinrichtung (7) eine oder mehrere Gewindebohrungen (23a - 23f) aufweist und der eine oder die mehreren Anschlagskörper (19a -19f) jeweils einen Gewindeabschnitt umfassen, welcher mit einer der Gewindebohrungen (23a - 23f) verschraubbar ist.

## Claims

1. A sealing insert (1, 100) for sealing a conduit relative to an opening in a wall portion of a building wall, having
- an outer sealing portion (3) for sealing against the opening,
- a sealing body (15) which bears the outer sealing portion (3),
- a plurality of inner sealing portions (5) for sealing against conduits of different diameter,
- a first tensioning device (7) for tensioning the outer sealing portion (3), wherein the inner sealing portions (5) are uncoupled from the outer sealing portion (3) to avoid influencing by the first tensioning device (7), wherein the first tensioning device (7) has two tensioning bodies (11a, 11b), movable relative to one another, for tensioning the outer sealing portion (3), and
- a flexible and longitudinally-adjustable compensator portion (33) which connects the outer sealing portion and the inner sealing portions (5),
wherein at least one of the tensioning bodies (11a, 11b) has a supporting surface (29a, 29b, 31a, 31b) which supports the sealing body (15) inwards in a radial direction, whereby an expansion of the sealing body (15) inwards in a radial direction is prevented or considerably reduced, so that a radial expansion of the sealing body (15) outwards is effected from the entire tensioning force applied to tension the outer sealing portion (3) or from at least a majority of this tensioning force, and wherein adjacent, inner sealing portions (5) are connected by means of bridge portions (27a-27e).

2. A sealing insert (1) according to claim 1,
**characterised in that** the compensator portion (33) is rotationally-symmetrical.

3. A sealing insert (1) according to claim 1 or 2,
**characterised in that** the compensator portion (33) comprises a membrane folded once or multiple times.

4. A sealing insert (1) according to any one of the preceding claims,
**characterised in that** the compensator portion (33) has a plurality of coaxially arranged ring portions of different diameter, wherein adjacent ring portions are preferably connected by means of a bent folded portion.

5. A sealing insert (1) according to any one of the preceding claims,
**characterised in that** the plurality of inner sealing portions (5) have substantially annular cross-sections of different diameter and are arranged substantially coaxially.

6. A sealing insert (1) according to any one of the preceding claims,
**characterised in that** the plurality of inner sealing portions (5) are arranged axially offset from one another.

7. A sealing insert (1) according to any one of the preceding claims,
**characterised by** a second tensioning device (9) for tensioning an inner sealing portion (5) of the plurality of inner sealing portions (5).

8. A sealing insert (1) according to any one of the preceding claims,
**characterised in that** both tensioning bodies (11a, 11b) of the first tensioning device (7) have a supporting surface (29a, 29b, 31a, 31b) which supports the sealing body (15) inwards in a radial direction.

9. A sealing insert (1) according to any one of the preceding claims,
**characterised in that** the supporting surface (29a, 29b, 31a, 31b) comprises a supporting portion (29a, 29b), running parallel to the outer sealing portion (3), and/or a supporting portion (31a, 31b), running at an incline to the outer sealing portion.

10. A sealing insert (1) according to any one of the preceding claims,
**characterised in that** a stop bounds the spacing between the tensioning bodies (11a, 11b) of the first tensioning device (7) and bounds the tensioning of the outer sealing portion (3).

11. A sealing insert (1) according to any one of the preceding claims,
**characterised in that** the tensioning bodies (11a, 11b) of the first tensioning device (7) each have a stop face (17a, 17b), wherein the stop faces (17a, 17b) are movable relative to one another and in a stop position impact against one another or against the sealing body (15).

12. A sealing insert (1) according to any one of the preceding claims,
**characterised by** one or a plurality of movable stop bodies (19a-19f) which in a stop position each impact against a stop face (21a-21f).

13. A sealing insert (1) according to claim 12,
**characterised in that** a tensioning body (11a, 11b) of the first tensioning device (7) has one or a plurality of tapped bores (23a-23f) and the one or plurality of stop bodies (19a-19f) each comprise a tapped portion which can be screwed to one of the tapped bores (23a-23f).

## Revendications

1. Élément d'étanchéité (1, 100) pour rendre étanche une conduite par rapport à un évidement dans une section de paroi d'une paroi de bâtiment, avec
- une section étanche (3) extérieure pour rendre étanche contre l'évidement ;
- un corps étanche (15) qui porte la section étanche (3) extérieure,
- plusieurs sections étanches (5) intérieures pour rendre étanche contre des conduites d'un diamètre différent,
- un premier dispositif de serrage (7) pour le serrage de la section étanche (3) extérieure, dans lequel les sections étanches (5) intérieures sont découplées de la section étanche (3) extérieure pour l'évitement d'une influence par le premier dispositif de serrage (7), dans lequel le premier dispositif de serrage (7) présente deux corps de serrage (11a, 11b) mobiles l'un par rapport à l'autre pour le serrage de la section étanche (3) extérieure, et
- une section de compensateur (33) flexible et de longueur modifiable qui relie la section étanche extérieure et les sections étanches (5) intérieures,
dans lequel au moins un des corps de serrage (11a, 11b) présente une surface d'appui (29a, 29b, 31a, 31b) qui appuie le corps étanche (15) dans le sens radial vers l'intérieur, par quoi une extension du corps étanche (15) dans le sens radial vers l'intérieur est empêchée ou est réduite considérablement de sorte qu'à partir de la force de serrage entière ou au moins une grande partie de la force de serrage appliquée pour le serrage de la section étanche (3) extérieure une extension radiale du corps étanche (15) soit provoquée vers l'extérieur, et dans lequel des sections étanches (5) intérieures contigües sont reliées au moyen de sections de nervure (27a-27e).

2. Élément d'étanchéité (1) selon la revendication 1, **caractérisé en ce que** la section de compensateur (33) est réalisée de manière symétrique en rotation.

3. Élément d'étanchéité (1) selon la revendication 1 ou 2,
**caractérisé en ce que** la section de compensateur (33) comporte une membrane pliée de manière simple ou multiple.

4. Élément d'étanchéité (1) selon l'une des revendications précédentes,
**caractérisé en ce que** la section de compensateur (33) présente plusieurs sections annulaires de diamètre différent agencées coaxialement, dans lequel des sections annulaires contigües sont reliées de préférence au moyen d'une section de pli courbée.

5. Élément d'étanchéité (1) selon l'une des revendications précédentes,
**caractérisé en ce que** les plusieurs sections étanches (5) intérieures présentent des sections transversales sensiblement annulaires de diamètre différent et sont agencées sensiblement coaxialement.

6. Élément d'étanchéité (1) selon l'une des revendications précédentes,
**caractérisé en ce que** les plusieurs sections étanches (5) intérieures sont agencées en déport axial les unes par rapport aux autres.

7. Élément d'étanchéité (1) selon l'une des revendications précédentes,
**caractérisé par** un second dispositif de serrage (9) pour le serrage d'une section étanche (5) intérieure des plusieurs sections étanches (5) intérieures.

8. Élément d'étanchéité (1) selon l'une des revendications précédentes,
**caractérisé en ce que** les deux corps de serrage (11a, 11b) du premier dispositif de serrage (7) présentent une surface d'appui (29a, 29b, 31a, 31b) qui appuie le corps étanche (15) dans le sens radial vers l'intérieur.

9. Élément d'étanchéité (1) selon l'une des revendications précédentes,
**caractérisé en ce que** la surface d'appui (29a, 29b, 31a, 31b) comporte une section d'appui (29a, 29b) s'étendant parallèlement à la section étanche (3) extérieure et/ou une section d'appui (31a, 31b) s'étendant de manière inclinée par rapport à la section étanche extérieure.

10. Élément d'étanchéité (1) selon l'une des revendications précédentes,
**caractérisé en ce qu'**une butée délimite la distance entre les corps de serrage (11a, 11b) du premier dispositif de serrage (7) et le serrage de la section étanche (3) extérieure.

11. Élément d'étanchéité (1) selon l'une des revendications précédentes,
**caractérisé en ce que** les corps de serrage (11a, 11b) du premier dispositif de serrage (7) présentent respectivement une surface de butée (17a, 17b), dans lequel les surfaces de butée (17a, 17b) sont mobiles l'une par rapport à l'autre et butent dans une position de butée l'une contre l'autre ou contre le corps étanche (15).

12. Élément d'étanchéité (1) selon l'une des revendications précédentes,
**caractérisé par** un ou plusieurs corps de butée mobiles (19a-19f) qui butent respectivement dans une position de butée contre une surface de butée (21a-21f).

13. Élément d'étanchéité (1) selon la revendication 12, **caractérisé en ce qu'**un corps de serrage (11a, 11b) du premier dispositif de serrage (7) présente un ou plusieurs perçages filetés (23a-23f) et les un ou plusieurs corps de butée (19a-19f) comportent respectivement une section filetée qui peut être vissée avec un des perçages filetés (23a-23f).
